# EUROPEAN PATENT APPLICATION

(11) **EP 2 023 148 A1**
(43) Date of publication of application: **11.02.2009**
(21) Application number: 07743490.0
(22) Date of filing: 16.05.2007
(51) Int. Cl.: G01N 35/02

(54) **ANALYTICAL INSTRUMENT**

(30) Priority: 22.05.2006 JP 2006141666
(71) Applicant: Olympus Corporation, Tokyo 151-0072 (JP)
(72) Inventor: KAYAHARA, Masato, Tokyo 151-0072 (JP); ABE, Tetsuya, Iwata-shi, Shizuoka 438-0063 (JP)
(74) Representative: von Hellfeld, Axel
(86) International application number: PCT/JP2007/060055
(87) International publication number: WO 2007/135921

(57) **Abstract**

To provide an analyzer, which can acquire accurate analysis data by suppressing vibration in a stirring area, and suppressing flowage of reaction liquid in a B/F separation area, the analyzer includes the stirring area where the reaction liquid is stirred, and the B/F separation area where a B/F separation of the reaction liquid is carried out, and further includes a turntable (3), which can sequentially transfer a cuvette (2) containing the reaction liquid to the areas, and the adjacent cuvettes (2) in the stirring area are shaken in opposite directions to cancel out vibration applied to the adjacent cuvettes (2) each other, whereby the vibration in the stirring area can be suppressed. As a result, the flowage of the reaction liquid in the B/F separation area can be suppressed, and the accurate analysis data can be acquired.

## Description

### TECHNICAL FIELD

The present invention relates to an analyzer and particularly to an analyzer suitable for an immunological analysis and a genetic analysis.

### BACKGROUND ART

The analyzer used for an immunological measurement includes a reagent setting area where a reagent is set, a specimen setting area where a specimen is set, a stirring area where reaction liquid (i.e., mixed liquid of a specimen and a reagent) is stirred, and a B/F separation area where a B/F separation of reaction liquid is carried out. Further, to sequentially transfer a reaction vessel such as a cuvette (referred to below as "cuvette") to the areas, a turntable containing the cuvette is rotatably arranged in the analyzer.

Further, the reaction liquid of the reagent and the specimen which are set in the reagent and specimen setting areas, respectively, is stirred by shaking the cuvette in the stirring area, and the reaction proceeds while the cuvette is transferred from the stirring area to the B/F separation area, i.e., while the turntable is rotating. Then, magnetic particles (magnetic carrier particle supporting the specimen) in the reaction liquid are gathered, cleaned, and dispersed with the use of a magnet in the B/F separation area, to carry out the B/F separation (e.g., see Patent Document 1)

Patent Document 1: Japanese Patent Application Laid-Open No. 2003-83988

### DISCLOSURE OF INVENTION

### PROBLEM TO BE SOLVED BY THE INVENTION

When the cuvette is shaken in the stirring area, however, the cuvette hits the turntable, thereby causing vibration in the stirring area. Further, the vibration propagates through the turntable to the B/F separation area, resulting in vibration of the reaction liquid contained in the cuvette. This leads to inadequate B/F separation because the vibration prevents the magnetic particles from being gathered with the magnet. With the inadequate B/F separation, desired analysis data may not be acquired.

The present invention is made in view of the foregoing, and an object of the present invention is to provide an analyzer which suppresses flowage of the reaction liquid in the B/F separation area by suppressing vibration in the stirring area, so that accurate analysis data can be acquired.

### MEANS FOR SOLVING PROBLEM

To solve the abovementioned problems and to achieve an object of the present invention, the present invention is an analyzer including a stirring area where reaction liquid is stirred, a B/F separation area where a B/F separation of the reaction liquid is carried out, and a turntable which can sequentially transfer a reaction vessel containing the reaction liquid to the areas. The reaction vessels adjacent to each other in the stirring area are shaken in opposite directions.

Further, the present invention includes lower-part supporting members each including a stirring member for shaking the reaction vessel, and gear units formed in the lower-part supporting members, respectively. The gear units are arranged so that the gear units in the adjacent lower-part supporting members engage with each other.

Further, in the present invention, the stirring members in the lower-part supporting members are arranged to have phases shifted from each other so that the vibration of the adjacent reaction vessels in the stirring area is cancelled out.

### EFFECT OF THE INVENTION

In the analyzer according to the present invention, the adjacent reaction vessels in the stirring area are shaken in the opposite directions, whereby vibration applied to the adjacent reaction vessels is cancelled out each other and vibration in the stirring area can be suppressed. As a result, flowage of reaction liquid in the B/F separation area can be suppressed, whereby accurate analysis data can be acquired.

Further, the gear section is formed in the lower-part supporting member where the stirring member to shake the reaction vessel is arranged, and the gear sections formed in the adjacent lower-part supporting members are provided to engage with each other, whereby rotation of one lower-part supporting member can rotate an adjacent lower-part supporting member in the opposite direction. As a result, the adjacent reaction vessels can be shaken in the opposite directions with one drive unit.

Further, to cancel out the vibration of the adjacent vessels in the stirring area, the adjacent stirring members, which are arranged in the lower-part supporting members, are arranged to have a phase shifted from each other, whereby vibration in the stirring area can be further suppressed.

### BRIEF DESCRIPTION OF DRAWINGS

FIG. 1 is a perspective view of an analyzer according to an embodiment of the present invention.
FIG. 2 is a plan view of the analyzer shown in FIG. 1.
FIG. 3A is a partly sectional schematic view of a configuration of a stirring area, and is a diagram indicating a status when a reaction vessel is transferred to the stirring area.
FIG. 3B is a partly sectional schematic view of the configuration of the stirring area, and is a diagram indicating a stirring status of a specimen and a reagent.
FIG. 4 is a plan schematic view of a configuration of the stirring area, and is a diagram indicating a stirring status of the specimen and the reagent.
FIG. 5 is a block diagram of a configuration of the analyzer shown in FIG. 5.

### EXPLANATIONS OF LETTERS OR NUMERALS

- 1: Analyzer
- 2: Cuvette
- 2a: Flange
- 3: Turntable
- 3a: Cuvette loading hole
- 4: Upper-part supporting unit
- 5: Lower-part supporting unit
- 6: Supporting member
- 6a: Cuvette supporting part
- 6b: Shaft part
- 7: Attachment member
- 7a: attachment hole
- 8: Bush
- 9: Compressed coiled spring
- 10: E-ring
- 11: Lower-part supporting member
- 11a: Gear unit
- 11b: Cuvette container
- 11c: Boss
- 11d: Stirring member container hole
- 12: Stirring member
- 13: Shaft
- 13a: First shaft part
- 13b: Flange part
- 13c: Second shaft part
- 14: Cuvette supporting unit
- 14a: Concave part
- 15: Bearing
- 20: Analysis unit
- 30: Control unit
- A11: First lower-part supporting member
- B11: Second lower-part supporting member
- C11: Third lower-part supporting member
- D11: Fourth lower-part supporting member

### BEST MODE(S) FOR CARRYING OUT THE INVENTION

Exemplary embodiments of an analyzer according to the present invention are described in detail below with reference to drawings. The present invention, however, is not limited to the embodiments.

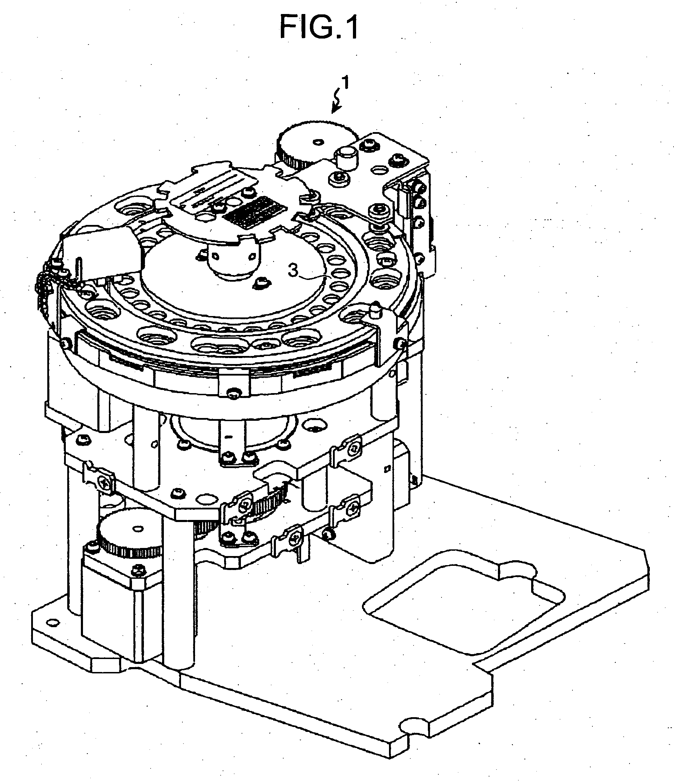

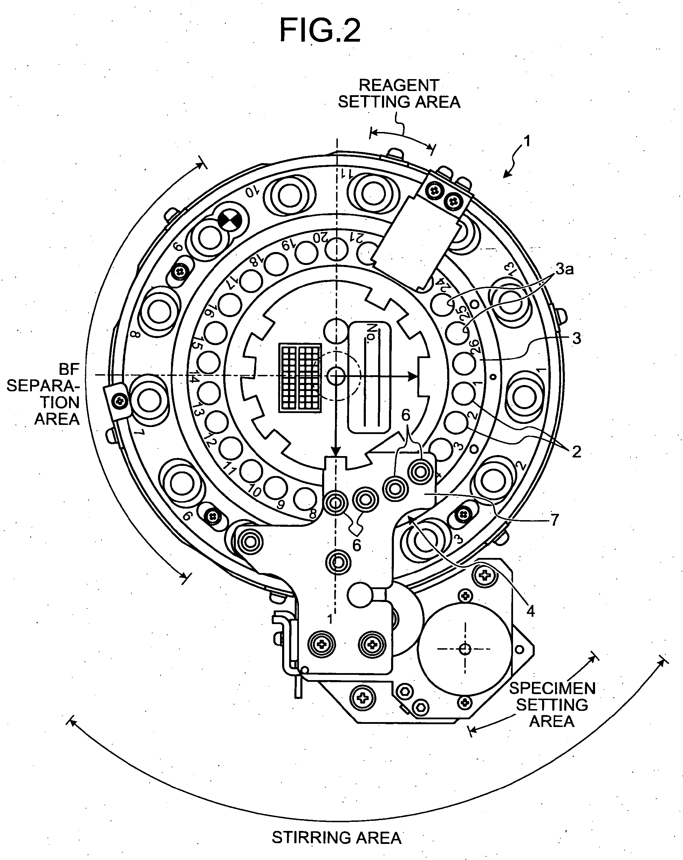

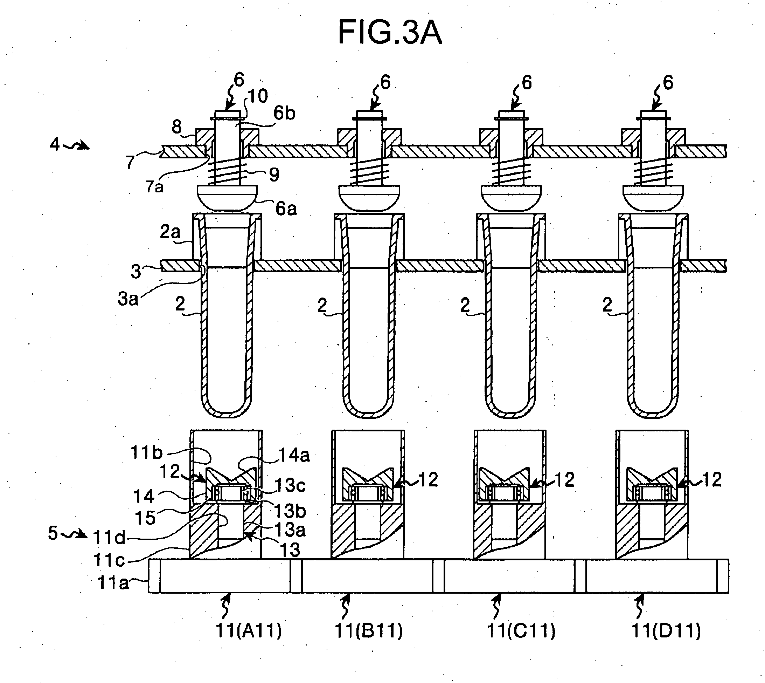

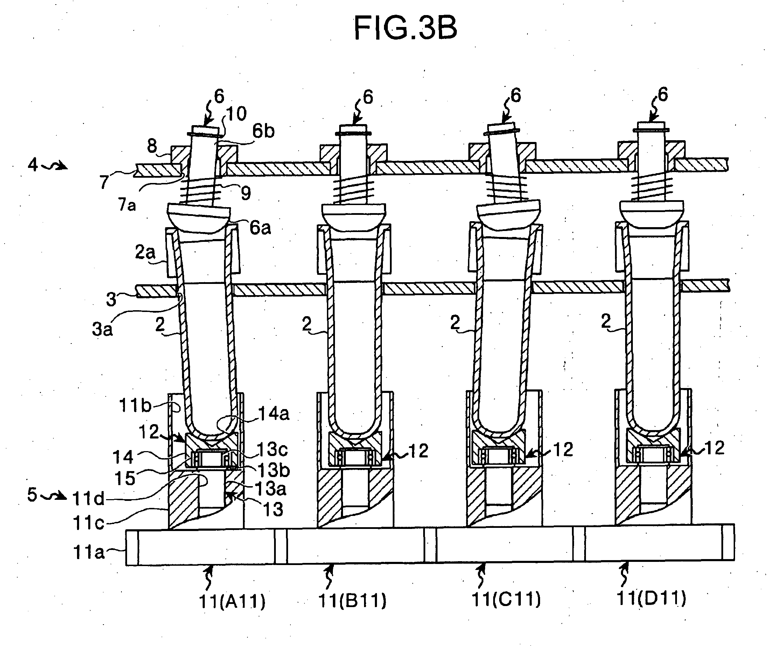

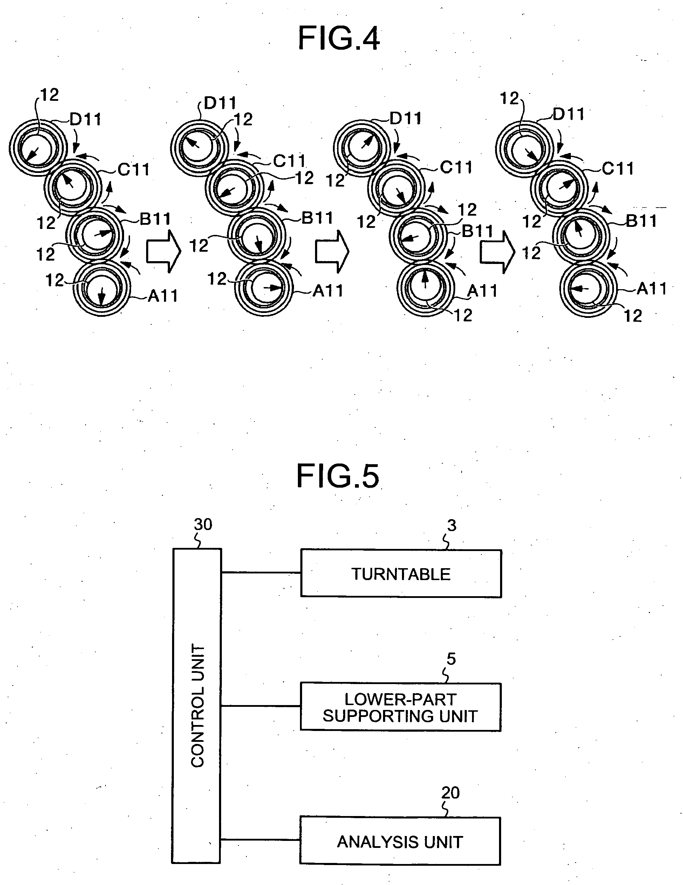

FIG. 1 is a perspective view of an analyzer according to an embodiment of the present invention, FIG. 2 is a plan view of the analyzer shown in FIG. 1, FIG. 3 is a partly sectional schematic view of a configuration of a stirring area, FIG. 3A is a diagram indicating a status when a reaction vessel is transferred to the stirring area, FIG. 3B is a diagram indicating a stirring status of the specimen and the reagent, FIG. 4 is a plan schematic view of a configuration of the stirring area, and is a diagram indicating a stirring status of the specimen and the reagent, and FIG. 5 is a block diagram of a configuration of the analyzer shown in FIG. 1.

The analyzer 1 according to the embodiment of the present invention includes a reagent setting area, a specimen setting area, a stirring area, and a B/F separation area. Further, a turntable 3 is rotatably provided to sequentially transfer a reaction vessel such as a cuvette (referred to below as "cuvette 2") to the areas (see FIG. 1).

The reagent setting area and the specimen setting area are areas where the cuvette 2 is provided and where the specimen and the reagent containing magnetic carrier particles are consequently dispensed. The stirring area is an area where a reaction liquid consisting of the reagent and the specimen, which are dispensed into cuvette 2 in the reagent setting area and the specimen setting area, is stirred. Further, the B/F separation area is an area where magnetic particles (i.e., magnetic carrier particles supporting the specimen) in the reaction liquid are gathered, cleaned, and dispersed with the use of a magnet, to carry out the B/F separation.

The turntable 3 transfers the cuvette 2 sequentially to the reagent setting area, the specimen setting area, the stirring area, and the B/F separation area as described. The turntable 3 also has cuvette loading holes 3a in which the cuvettes 2 are loaded. The cuvette loading holes 3a are provided at regular intervals on a same circle, and a size of each cuvette loading hole 3a is a little larger than an outer diameter of the cuvette

The cuvette 2 to be loaded in the cuvette loading hole 3a is a cylindrical reaction vessel having a bottom face and a side dace made of at least a transparent material. As shown in FIG. 3, a flange part 2a extending downward from an upper opening is formed on an upper part of the cuvette 2. The flange part 2a is a little larger than the cuvette loading hole 3a formed on the turntable 3, so that the flange part 2a comes into contact with an edge of the cuvette loading hole 3a to prevent the cuvette 2 from falling out of the turntable 3.

The stirring area is an area where the reaction liquid (mixed liquid of the specimen and the reagent) contained in the cuvette 2 is stirred by shaking the cuvette 2. The analyzer 1 according to the embodiment can stir, at the same time, reaction liquid contained in four of the cuvettes 2 loaded on the turntable 3.

In the stirring area, upper-part supporting units 4 and lower-part supporting units 5 are arranged corresponding to the four cuvettes 2 loaded on the turntable 3. The upper supporting unit 4 is fixed on a body of the analyzer, and does not interfere with the cuvette 2 loaded on the turntable 3 while the turntable 3 rotates, as shown in FIG. 3A. The upper-part supporting unit 4 closes and supports the upper opening of the cuvette 2, and includes four of supporting members 6 corresponding to the cuvettes, and an attachment member 7.

On the attachment member 7, four attachment holes 7a are provided, having a same pitch with the cuvette loading holes 3a provided on the turntable 3. Bushes 8 are attached to the attachment holes 7a. The supporting member 6 is attached to the bush 8 so as to move up and down. Since the bushes 8 are made of elastic material such as rubber for example, each supporting member 6 can be tilted.

Each supporting member 6 includes a cuvette supporting part 6a and a shaft part 6b. Each cuvette supporting part 6a has a diameter larger than the upper opening of the cuvette 2, and has a rounded surface which becomes progressively wider upward, so as to securely close and support the cuvette 2. The shaft part 6b penetrates through the bush 8 to support the supporting member 6 in the bush 8, and is part extending upward from the cuvette supporting unit 6a.

A compression coiled spring 9 is wound around the shaft unit 6b of each supporting member 6 to press each supporting member 6 downward. Further, an E-ring 10 is attached around the shaft part 6b of each supporting member 6 which penetrates through the bush 8. The E-ring 10 prevents the supporting member 6 from falling off by own weight of the supporting member 6 or the pressing force of the compression coiled spring 9.

A lower-part supporting unit 5 can move up and down, and moves up without interfering with the cuvette 2 loaded on the turntable 3 being rotating, only when the turntable 3 is stopped, as shown in FIG. 3A. The cuvette 2 can be firmly held between the upper-part supporting member 4 and the lower-part supporting unit 5. The lower-part supporting unit 5 shakes the cuvette 2, which is firmly held, and includes four lower-part supporting members 11 corresponding to the cuvettes 2. Each lower-part supporting member 11 includes a gear unit 11a and a cuvette container 11b.

The gear unit 11a is a part-where power is transmitted, and the cuvette container 11b is formed on a boss 11c extending upward from the gear unit 11a. The cuvette container 11b is a cylindrical concave part. A stirring member container hole 11d is formed on a bottom wall of the cuvette container 11b to be decentered from a rotation axis of the gear unit 11a.

The stirring member container hole 11d contains a stirring member 12 for supporting a lower-part of the cuvette 2. The stirring member 12 includes a shaft 13 and a cuvette supporting unit 14. The shaft 13 includes a first shaft part 13a, a flange part 13b, and a second shaft part 13c. The first shaft part 13a is contained in the stirring member container hole 11d and has a cylindrical shape. The flange part 13b comes into contact with an outer edge of the stirring member container hole 11d to position the stirring member 12 in the direction of the shaft, and has a diameter larger than that of the first shaft part 13a. The second shaft part 13c supports an inner race of a bearing 15, and has a diameter smaller than that of the flange part 13b. The cuvette supporting unit 14 supports the lower-part of the cuvette 2, and supports an outer race of the bearing 15. Accordingly, the cuvette supporting unit 14 is rotatable around the shaft 13. The cuvette supporting unit 14 has a cylindrical shape, and a cone-shaped convex part 14a is formed on an upper surface of the cuvette supporting unit 14.

The lower-part supporting members 11 are provided so that the gear units 11a are connected to each other in series. Specifically, starting from left to right in FIG. 3, a first lower-part supporting member All, a second lower-part supporting member B11, a third lower-part supporting member C11, and a fourth lower-part supporting member D11 are provided, and the gear units 11a of the lower-part supporting members 11 sequentially engage with each other to transmit power. Specifically, when the first lower-part supporting member A11 is rotated in an anticlockwise direction in FIG. 4, the second lower-part supporting member B11 rotates in a clockwise direction, the third lower-part supporting member C11 rotates in the anticlockwise direction, and the fourth lower-part supporting member D11 rotates in the clockwise direction. In other words, the adjacent lower-part supporting members 11 (i.e., the first lower-part supporting member All, the second lower-part supporting member B11, the third lower-part supporting member C11, and the fourth lower-part supporting member D11) rotate in opposite directions.

The stirring members 12 contained in the lower-part supporting members 11 are arranged with a phase shifted from each other to cancel out vibration. Specifically, when a phase of the stirring member 12 contained in the first lower-part supporting member A11 is considered to be a reference (a decentering direction is indicated by arrow in FIG. 4), a phase of the stirring member 12 contained in the second lower-part supporting member B11 is shifted by 90 degrees in the anticlockwise direction, a phase of the stirring member 12 contained in the third lower-part supporting member C11 is shifted by 180 degrees, and a phase of the stirring member 12 contained in the fourth lower-part supporting member D11 is shifted by 90 degrees in the clockwise direction.

As shown in FIG. 5, besides the turntable 3 and the lower-part supporting unit 5 described above, an analysis unit 20, which analyzes the BF-separated reaction liquid by measuring photometric property of the same, is connected to a control unit 30, and is controlled by the control unit 30. Specifically, after a control signal from the control unit 30 makes the turntable 3 rotate by predetermined degrees, the lower-part supporting unit 5 is moved up and then the lower-part supporting unit 5 (the lower-part supporting member 11) is rotated, so that the reaction liquid is stirred. It should be noted that the analysis unit 20 is controlled by the control unit 20 to measure the photometric property of the reaction liquid contained in the cuvette 2 loaded on the turntable 3 every time the turntable 3 is rotated.

In the analyzer 1 described above, in the reagent setting area and the specimen setting area, the cuvette 2 is provided and the specimen and the reagent containing magnetic particles are dispensed.

On the other hand, in the stirring area, as shown in FIG. 3B, firstly the lower-part supporting unit 5 starts to move upward. As the lower-part supporting unit 5 starts to move upward, the cuvette 2 is contained in the cuvette container 11b, and the cuvette 2 comes into contact with the concave part 14a of the cuvette supporting unit 14 (the stirring member 12). When the lower-part supporting unit 5 further moves upward, the flange part 2a of the cuvette 2 moves upward away from the turntable 3, and the upper opening of the cuvette 2 is closed by the supporting member 6, whereby the cuvette 2 is held between the stirring member 12 and the supporting member 6. Since the stirring member 12 is contained in the stirring member container hole 11d, which is decentered from the rotation axis of the gear unit 11a of the lower-part supporting member 11, the cuvette 2 is tilted and firmly held.

Next, when a driving source (not shown) such as a motor rotates the first lower-part supporting member All in the counterclockwise direction, the second lower-part supporting member B11 rotates in the clockwise direction, the third lower-part supporting member C11 rotates in the counterclockwise direction, and the fourth lower-part supporting member D11 rotates in the clockwise direction as shown in FIG. 4.

In the description above, since the stirring member container hole 11d in which the stirring member 12 is contained is provided to be decentered from the rotation axis of the gear unit 11a, the lower-part of the cuvette 2, which is firmly held between the cuvette supporting unit 14 and the supporting member 6, is shaken following a track of a circle with a shaking center being set at the supporting member 6, whereby the reaction liquid is stirred. Further, the adjacent lower-parts of the cuvettes 2 are shaken in opposite directions following each track of circles. Since the stirring member container holes 11d, which are provided on the first lower-part supporting member All, the second lower-part supporting member B11, the third lower-part supporting member C11, and the fourth lower-part supporting member D11, respectively, have phases shifted from each other, the rotation suppresses vibration in the stirring area.

When the stirring of the reaction liquid is completed, the lower-part supporting unit 5 starts to move downward. Then, after the upper opening of the cuvette 2 moves away from the cuvette supporting unit 6a, the flange part 2a of the cuvette 2 comes into contact with an edge of the cuvette loading hole 3a on the turntable 3. Then, when the lower-part supporting unit 5 moves downward to a sufficient degree and the cuvette 2 no longer interferes with the lower-part supporting unit 5, the turntable 3 becomes rotatable as shown in FIG. 3A.

On the other hand, in the B/F separation area, the magnetic particles (i.e., magnetic carrier particles supporting the specimen) in the reaction liquid are gathered, cleaned, and dispersed with the use of the magnet, to carry out the B/F separation.

When each of the operations described above in the reagent setting area, the specimen setting area, the stirring area, the B/F separation area, are completed, the turntable 3 is rotated to transfer the cuvette 2 located in the reagent setting area and the specimen setting area to the stirring area, and the cuvette 2 located in the stirring area to the B/F separation area. Then, in each area, the procedure described above is repeated.

In the analyzer described above, since the lower-parts of the adjacent cuvettes 2 in the stirring area are shaken in opposite directions following each track of circles with the shaking center being set at the supporting member 6, vibration applied to the adjacent cuvettes is cancelled out, whereby vibration in the stirring area can be suppressed. As a result, flowage of the reaction liquid in the B/F separation area can be suppressed, and accurate analysis data can be acquired.

Further, since the gear unit 11a is formed in the lower-part supporting member 11 where the stirring member 12 to shake the cuvette 2 is arranged, and the gear units 11a formed in the adjacent lower-part supporting member 11 are provided to engage with each other, rotation of one of the lower-part supporting members 11 makes the adjacent lower-part supporting member 11 rotate in the opposite direction. As a result, a drive unit such as one motor can shake the lower-parts of the adjacent cuvette 2 in such a manner that the lower-parts follow each track of circles in opposite directions.

Further, since the stirring members 12 arranged in the adjacent lower-part supporting members 11 have phases shifted from each other to cancel out vibration of the adjacent cuvettes in the stirring area, vibration in the stirring area can be further suppressed.

Although the lower-part supporting members 11 are provided to make the gear units 11a engage with each other in series in the analyzer according to the embodiment describe above, any configuration may be applied as long as the adjacent cuvettes 2 in the stirring area are shaken in opposite directions, and thus a pulley and a belt may be used, or a drive unit such as a motor may be provided for each lower-part supporting member 11.

Further, although it is described that four cuvettes 2 in the stirring area are shaken to stir the reaction liquid, the present invention is not limited to the embodiment with the four cuvettes 2, and any number of cuvettes 2 may be shaken as long as the adjacent cuvettes 2 are shaken in the opposite directions.

Further, although the phase difference of the stirring member container holes 11d in which the stirring members 12 are contained is set to 90 degrees to suppress the vibration in the stirring area, the phase difference is not limited to 90 degrees, and any phase difference may be used as long as the vibration in the stirring area is suppressed.

Further, not limited to the analyzer using the cuvette 2, the present invention may be applied to an analyzer using a microplate.

## Claims

1. An analyzer comprising
a stirring area where reaction liquid is stirred;
a B/F separation area where a B/F separation of the reaction liquid is carried out; and
a turntable which can sequentially transfer a reaction vessel containing the reaction liquid to the areas, wherein
the reaction vessels adjacent to each other in the stirring area are shaken in opposite directions.

2. The analyzer according to claim 1, further comprising:
lower-part supporting members each including a stirring member for shaking the reaction vessel; and
gear units formed in the lower-part supporting members, respectively, wherein
the gear units are arranged so that the gear units in the adjacent lower-part supporting members engage with each other.

3. The analyzer according to claim 1 or 2, wherein
the stirring members in the adjacent lower-part supporting members are arranged to have phases shifted from each other so that the vibration of the adjacent reaction vessels in the stirring area is cancelled out.
